(19) Europäisches Patentamt
European Patent Office
Office européen des brevets

(11) **EP 3 114 459 B1**

(12) **FASCICULE DE BREVET EUROPEEN**

(45) Date de publication et mention
de la délivrance du brevet:
**29.09.2021 Bulletin 2021/39**

(21) Numéro de dépôt: **15707687.8**

(22) Date de dépôt: **05.03.2015**

(51) Int Cl.:
**G01N 15/14** *(2006.01)*   **G01N 21/47** *(2006.01)*
**G03H 1/04** *(2006.01)*   **G03H 1/08** *(2006.01)*
**G03H 1/00** *(2006.01)*

(86) Numéro de dépôt international:
**PCT/EP2015/054669**

(87) Numéro de publication internationale:
**WO 2015/132360 (11.09.2015 Gazette 2015/36)**

(54) **PROCÉDÉ ET SYSTÈME DE CARACTÉRISATION D'UN ÉTAT D'ADHÉSION DE PARTICULES, TELLES QUE DES CELLULES**

VERFAHREN UND SYSTEM ZUR CHARAKTERISIERUNG EINES ADHÄSIONSTATUS VON PARTIKELN WIE ETWA ZELLEN

METHOD AND SYSTEM FOR CHARACTERISING A STATE OF ADHESION OF PARTICLES SUCH AS CELLS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.03.2014 FR 1451785**

(43) Date de publication de la demande:
**11.01.2017 Bulletin 2017/02**

(73) Titulaire: **Commissariat à l'Energie Atomique et
aux Energies
Alternatives
75015 Paris (FR)**

(72) Inventeurs:
 • **ALLIER, Cédric
  38000 Grenoble (FR)**
 • **VINJIMORE KESAVAN, Srikanth
  72000 Le Mans (FR)**

(74) Mandataire: **Lavoix
2, place d'Estienne d'Orves
75441 Paris Cedex 09 (FR)**

(56) Documents cités:
 • **ALLIER C P ET AL: "Video lensfree microscopy
  of 2D and 3D culture of cells", PROGRESS IN
  BIOMEDICAL OPTICS AND IMAGING, SPIE -
  INTERNATIONAL SOCIETY FOR OPTICAL
  ENGINEERING, BELLINGHAM, WA, US, vol. 8947,
  4 mars 2014 (2014-03-04), pages 89471H-89471H,
  XP060033864, ISSN: 1605-7422, DOI:
  10.1117/12.2038098 ISBN: 978-0-8194-9850-2**
 • **MONIKA E. DOLEGA ET AL: "Label-free analysis
  of prostate acini-like 3D structures by lensfree
  imaging", BIOSENSORS AND
  BIOELECTRONICS, vol. 49, 21 mai 2013
  (2013-05-21), pages 176-183, XP055132939, ISSN:
  0956-5663, DOI: 10.1016/j.bios.2013.05.001**
 • **Srikanth Vinjimore Kesavan: "Multi-scale
  high-throughput cell culture monitoring by
  lensfree imaging", , 21 septembre 2013
  (2013-09-21), XP055149079, Extrait de l'Internet:
  URL:http://www.wmis.org/abstracts/2013/dat
  a/papers/SS166.htm [extrait le 2014-10-27]**
 • **S. VINJIMORE KESAVAN ET AL: "Lensless
  imaging system to quantify cell proliferation",
  PROCEEDINGS OF SPIE, vol. 8587, 22 février
  2013 (2013-02-22), page 858708, XP055149247,
  ISSN: 0277-786X, DOI: 10.1117/12.2001826**

EP 3 114 459 B1

**(Cont. page suivante)**

- L. REPETTO ET AL: "Lensless digital holographic microscope with light-emitting diode illumination", OPTICS LETTERS, vol. 29, no. 10, 15 mai 2004 (2004-05-15), page 1132, XP055186704, ISSN: 0146-9592, DOI: 10.1364/OL.29.001132
- VIJAYKRISHNA RAGHUNATHAN ET AL: "Influence of Extracellular Matrix Proteins and Substratum Topography on Corneal Epithelial Cell Alignment and Migration", TISSUE ENGINEERING PART A, vol. 19, no. 15-16, 14 mars 2013 (2013-03-14), pages 1713-1722, XP055186414, ISSN: 1937-3341, DOI: 10.1089/ten.tea.2012.0584
- "MATLAB kurtosis", , XP055186686, Extrait de l'Internet: URL:http://nl.mathworks.com/help/stats/kurtosis.html [extrait le 2015-04-29]
- PASCHALAKIS S ET AL: "Pattern recognition in grey level images using moment based invariant features", IMAGE PROCESSING AND ITS APPLICATIONS, 1999. SEVENTH INTERNATIONAL CON FERENCE ON (CONF. PUBL. NO. 465) MANCHESTER, UK 13-15 JULY 1999, LONDON, UK,IEE, UK, vol. 1, 13 juillet 1999 (1999-07-13), pages 245-249, XP006501304, DOI: 10.1049/CP:19990320 ISBN: 978-0-85296-717-1
- GEONSOO JIN ET AL: "Lens-free shadow image based high-throughput continuous cell monitoring technique", BIOSENSORS AND BIOELECTRONICS, ELSEVIER BV, NL, vol. 38, no. 1, 9 mai 2012 (2012-05-09), pages 126-131, XP028398334, ISSN: 0956-5663, DOI: 10.1016/J.BIOS.2012.05.022 [extrait le 2012-05-27]
- None

**Description**

La présente invention concerne un procédé de caractérisation d'un état d'adhésion d'au moins une particule. La ou les particules, telles que des cellules, sont contenues dans un milieu liquide, le milieu liquide étant délimité par une surface transparente, et la ou les particules sont propres à adhérer à ladite surface transparente.

L'invention concerne également un système de caractérisation de l'état d'adhésion de la ou des particules à ladite surface transparente.

L'adhésion cellulaire est généralement classée suivant deux catégories, à savoir une première catégorie relative à l'adhésion entre une cellule et un substrat et une seconde catégorie relative à l'adhésion entre deux cellules. La présente invention concerne la première catégorie d'adhésion cellulaire entre la cellule et le substrat.

La plupart des cellules sont adhérentes à un substrat, à quelques exceptions près comme par exemple les cellules hématopoïétiques. L'adhésion d'une cellule à un substrat est un processus complexe impliquant diverses protéines. En plus de diverses autres fonctions telles que la métastase, la guérison des plaies, la différenciation des tissus, l'adhésion d'une cellule à un substrat forme un moyen de communication entre la cellule et son environnement. Cette communication est nécessaire pour que les cellules migrent et prolifèrent. L'incapacité de cellules à adhérer au substrat pourrait conduire à leur mort.

L'étude de l'adhésion de la cellule au substrat est donc importante pour analyser les processus fondamentaux associés à la cellule. Une telle étude est susceptible de répondre à des questions concernant les relations entre la structure et la fonction de molécules d'adhérence cellulaire et de leurs ligands respectifs. Une telle étude est par ailleurs susceptible de fournir des informations sur la connexion entre les propriétés adhésives individuelles de cellules et leur capacité à agir dans un environnement multicellulaire, lors de l'examen de processus tels que la croissance, l'angiogenèse, l'invasion, l'extravasation, la métastase, la synthèse des protéines de la matrice ou encore la sécrétion d'enzymes de dégradation. L'étude de l'adhésion de la cellule au substrat est enfin un outil utile dans le dépistage de réactifs qui interfèrent avec l'adhésion cellulaire à des substrats, ou encore la favorisent, comme cela a été décrit dans l'article « Enzymatic quantification of cell-matrix and cell-cell adhesion », de Löster et al, publié dans la revue Micron, volume 31, numéro 1, pages 41 à 53, en janvier 2000.

Différentes techniques pour l'étude de l'adhésion de la cellule au substrat ont été décrites dans l'article précité, dans l'article « Cell adhesion assays » de M. J. Humphries, publié dans la revue Methods in molecular biology, volume 522, pages 203 à 210, en janvier 2009, ainsi que dans l'article « Heterotypic Cell Adhesion Assay for the Study of Cell Adhesion Inhibition» de Satyanarayanajois et al, publié dans la revue Drug Design and Discovery.

"Video lensfree microscopy of 2D and 3D culture of cells" de Allier et al, "Label-free analysis of prostate acini-like 3D structures by lensfree imaging" de Dolega et al, « Multi-scale high-throughput cell culture monitoring by lensfree imaging » de Vinjimore et al, et « Lensless imaging system to quantify cell prolifération » de Vinjimore et al décrivent chacun un procédé d'imagerie sans lentille.

"Influence of extracellular matrix proteins and substratum topography on corneal epithelial cell alignment and migration" de Raghunathan et al. concerne une étude en microscopie de l'alignement et la migration de cellules épithéliales de la cornée. Une analyse statistique a été effectuée, suivie d'un test de comparaison multiple de Dunnett par rapport à des témoins respectifs (cellules sur surfaces planes ou sans traitement FNC - FibroNectine-Collagène). Pour déterminer l'effet différentiel du FNC sur un rapport d'axes et la surface, un diagramme en boites (de l'anglais *box plot)* a d'abord été effectué sur les données, puis des mesures d'asymétrie (de l'anglais *skewness*) et d'aplatissement (de l'anglais *kurtosis*) ont été déterminées pour éviter une mauvaise interprétation de valeurs aberrantes.

Ces techniques impliquent différentes manipulations, typiquement des ajouts de réactifs dans le liquide, suivis de multiples lavages et de multiples acquisitions optiques (microscopie, cytométrie, densité optique). De fait, elles sont coûteuses en réactifs, et en temps homme et restent difficiles à mettre en œuvre. En particulier, elles dépendent fortement de l'efficacité du réactif. Plus important, elles ne permettent pas ou difficilement d'effectuer des mesures en continu dans le temps. De plus, elles ne permettent pas de suivre des milliers de cellules individuellement ce qui diminue la qualité statistique de la mesure. Au-delà l'utilisation d'un marquage et/ou d'un réactif peut interférer avec la vie de la cellule ce qui biaise la mesure. Dans le pire des cas, la méthode est destructive de l'échantillon : le marquage fluorescent associé à une mesure en cytométrie est destructif pour l'échantillon.

Le but de l'invention est donc de proposer un procédé et un système de caractérisation d'un état d'adhésion d'au moins une particule à un substrat qui soient moins coûteux, plus faciles à mettre en œuvre. D'un point de vue expérimental, l'invention permet alors d'effectuer une mesure en continu de l'adhésion cellulaire, de suivre en parallèle des milliers de cellules avec une mesure unique par cellule, et de ne pas nécessité de marquage ni de réactif.

A cet effet, l'invention a pour objet un procédé de caractérisation d'un état d'adhésion d'au moins une particule, selon la revendication 1.

Suivant d'autres aspects avantageux de l'invention, le procédé de caractérisation est selon l'une quelconque des revendications 2 à 10.

L'invention a également pour objet un système de caractérisation d'un état d'adhésion d'au moins une particule, selon la revendication 11.

Les caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue en perspective d'un système de caractérisation selon l'invention,
- la figure 2 est une vue éclatée du système de caractérisation de la figure 1,

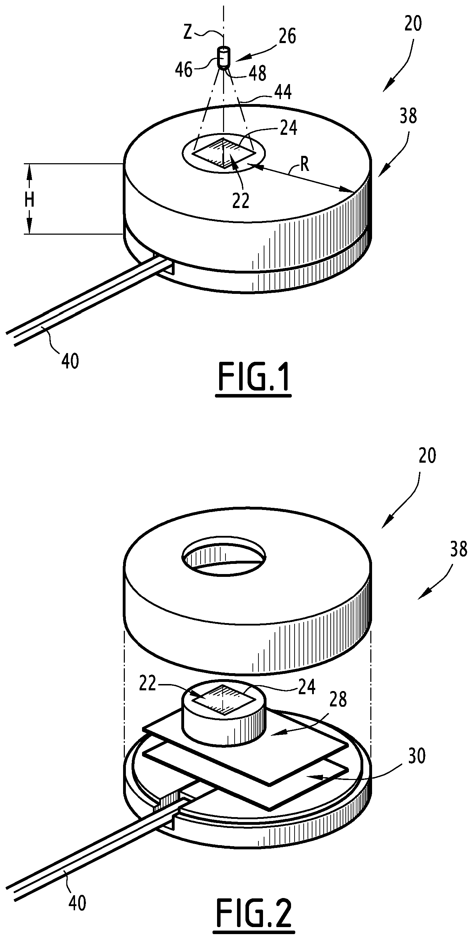

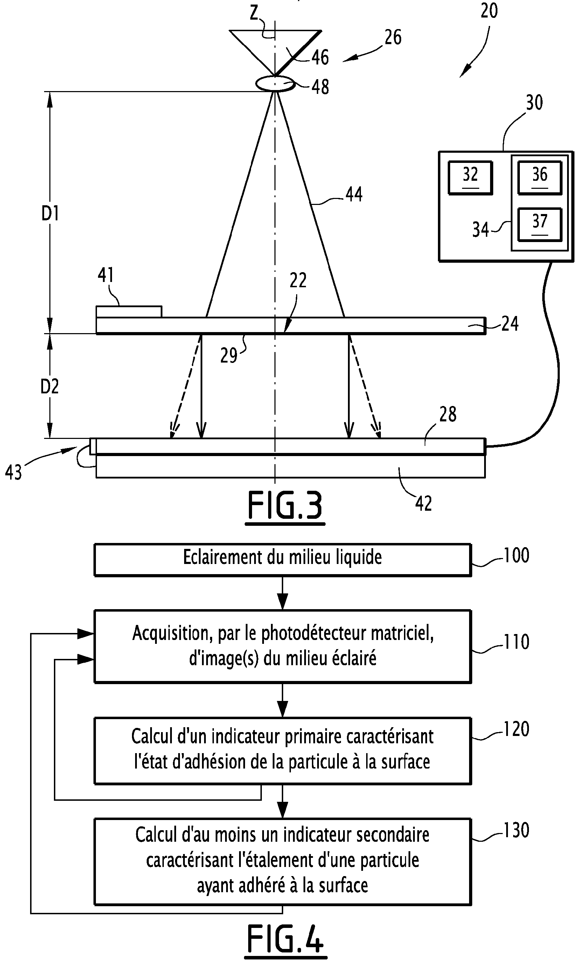

- la figure 3 est une représentation schématique du système de caractérisation de la figure 1, le système de caractérisation comprenant une source de lumière, un photodétecteur matriciel, et une unité de traitement d'informations comportant des premiers moyens de calcul d'un indicateur primaire caractérisant l'état d'adhésion d'une particule correspondante, telle qu'une cellule, à la surface transparente et des deuxièmes moyens de calcul d'au moins un indicateur secondaire caractérisant l'étalement de la cellule ayant adhéré à la surface transparente, le ou chaque indicateur secondaire étant distinct de l'indicateur primaire,
- la figure 4 est un organigramme d'un procédé de caractérisation selon l'invention,
- la figure 5 est un ensemble d'images, chacune contenant une figure de diffraction correspondant à une même particule, les images étant acquises à l'aide du photodétecteur de la figure 3, au cours d'une période temporelle de 3 heures, lors de l'adhésion de la particule à la surface transparente,
- la figure 6 est une courbe représentant, en fonction du temps sur une période de 3 heures, un indicateur primaire caractérisant l'état d'adhésion à la surface transparente de la particule associée aux images successives de la figure 5,
- la figure 7 est un ensemble de 19 courbes associées à différentes images successives au cours d'une période temporelle de 3 heures, chaque image contenant une figure de diffraction correspondant à une même particule, deux courbes successives étant séparées par un intervalle de 10 minutes, chaque courbe représentant l'intensité au voisinage du centre de la figure de diffraction en fonction d'une distance exprimée en micromètre, le centre de la figure de diffraction correspondant à la distance égale à 75 $\mu$m,
- la figure 8 est un ensemble de deux courbes représentant chacune, en fonction du temps, un pourcentage de cellules ayant adhéré à la surface transparente, chaque courbe étant associée à une population respective de cellules,
- la figure 9 est une courbe représentant l'évolution en fonction du temps de la dérivée temporelle d'un premier indicateur secondaire caractérisant l'étalement d'une cellule ayant adhéré à la surface transparente, le premier indicateur secondaire étant fonction du moment d'ordre 3 de l'intensité au centre de la figure de diffraction correspondant à ladite cellule,
- la figure 10 est une courbe représentant l'évolution en fonction du temps de la dérivée temporelle d'un deuxième indicateur secondaire caractérisant l'étalement de la cellule ayant adhéré à la surface transparente, le deuxième indicateur secondaire étant fonction du moment d'ordre 4 de l'intensité au centre de la figure de diffraction correspondant à ladite cellule,
- la figure 11 est une vue analogue à celle de la figure 5 lors du détachement de la particule par rapport à la surface transparente, au cours d'une période temporelle de 100 minutes, et
- la figure 12 est une courbe analogue à celle de la figure 6 caractérisant l'état d'adhésion de la particule associée aux images de la figure 11.

Dans la suite de la description, l'expression « sensiblement égal à » définit une relation d'égalité à plus ou moins 5 %.

Sur les figures 1 et 2, un système 20 de caractérisation d'un état d'adhésion de particules 22 contenues dans un milieu liquide 24, comprend une source de lumière 26 spatialement cohérente et un photodétecteur matriciel 28 propre à acquérir au moins une image d'un rayonnement transmis par le milieu 24 éclairé par la source de lumière 26. Le milieu liquide 24 est délimité par une surface transparente 29, visible sur la figure 3, et l'état d'adhésion caractérisé par le système de caractérisation 20 est l'état d'adhésion des particules 22 à la surface transparente 29.

Le système de caractérisation 20 comprend également une unité de traitement d'informations 30, visible sur la figure 3, comportant un processeur 32 et une mémoire 34. La mémoire 34 est apte à stocker un premier logiciel 36 de calcul, à partir d'au moins une image acquise et pour au moins une particule 22, d'un indicateur primaire caractérisant l'état d'adhésion de la particule 22 à la surface transparente 29. En complément, la mémoire 34 est apte à stocker un deuxième logiciel 37 de calcul, à partir d'au moins une image acquise et pour au moins une particule 22, d'au moins un indicateur secondaire S, K caractérisant l'étalement d'une cellule 22 ayant adhéré à la surface transparente 29, le ou chaque indicateur secondaire S, K étant distinct de l'indicateur primaire.

En variante, les premiers moyens de calcul 36 et les deuxièmes moyens de calcul 37 sont réalisés sous forme de composants logiques programmables ou encore sous forme de circuits intégrés dédiés.

Ainsi, de façon générale, le système de caractérisation 20 est destiné à caractériser l'adhésion ou non d'une particule donnée 22, telle qu'une cellule, à la surface transparente 29, et le cas échéant à caractériser en outre l'étalement d'une cellule 22 ayant adhéré à la surface transparente 29. Le système de caractérisation 20 est alors apte à caractériser l'adhésion de la particule 22 à la surface transparente 29 lorsque ladite particule 22 se déplace en direction de cette surface, mais également le détachement d'une particule 22 par rapport à la surface 29 à laquelle la particule a préalablement adhéré. L'adhésion de la particule 22 correspond au moment où la particule 22 prend prise sur la surface 29, ou encore au moment où la particule 22 entre en contact avec ladite surface 29 et y adhère.

Le système de caractérisation 20 comprend un boîtier de protection 38, visible sur les figures 1 et 2, à l'intérieur duquel sont disposés notamment le photodétecteur 28 et l'unité de traitement d'informations 30. Le système de caractérisation 20 comprend une liaison filaire 40 d'alimentation électrique.

En complément, le système de caractérisation 20 comprend une source de chaleur 41, telle qu'une résistance chauffante, visible sur la figure 3, afin d'éviter toute condensation sur un éventuel capot de protection du milieu liquide 24, ceci pour ne pas perturber l'acquisition des images par le photodétecteur matriciel 28. La source de chaleur 41 est par exemple disposée à l'intérieur du boîtier de protection 38.

En complément encore, le système de caractérisation 20 comprend un module 42 de régulation de température, couplé à une sonde de température 43, comme représenté sur la figure 3. Le module de régulation de température 42 permet de réguler la température du photodétecteur matriciel 28 à une température prédéterminée, par exemple à 37° Celsius, afin de ne pas perturber la bonne croissance cellulaire. Le module de régulation de température 42 est par exemple un module de type Peltier, et la sonde de température 43 est connue en soi. Le module de régulation 42 et la sonde de température 43 sont par exemple disposés à l'intérieur du boîtier de protection 38.

Les particules diffractantes 22 sont, par exemple, des particules biologiques, c'est-à-dire des cellules (par exemple des cellules endothéliales, des neurones, des cellules tumorales), des bactéries ou colonies bactériennes, des cellules ou agrégats de cellules.

Les particules diffractantes 22 présentent un diamètre de préférence inférieur à 20 $\mu$m. Le diamètre des particules diffractantes 22 est, par exemple, compris entre 1$\mu$m et 100 $\mu$m. Les cellules présentent un diamètre de l'ordre de 10 $\mu$m.

Le milieu liquide 24 est délimité par la surface transparente 29, visible sur la figure 3. Les particules diffractantes 22 baignent dans le milieu liquide 24, certaines particules 22 étant au contact de ladite surface transparente 29.

Le milieu 24 est disposé entre la source de lumière 26 et le photodétecteur matriciel 28, et est sensiblement perpendiculaire à une direction verticale Z correspondant à la direction d'éclairement du milieu par la source de lumière 26, comme représenté sur la figure 3.

La source de lumière 26 est propre à émettre un faisceau lumineux 44 selon la direction verticale Z, afin d'éclairer le milieu liquide 24 comprenant les particules diffractantes 22.

La source de lumière 26 est disposée à une première distance D1 de la surface transparente 29 selon la direction verticale Z. La première distance D1 présente, de préférence, une valeur comprise entre 1 cm et 30 cm, par exemple égale à 8 cm.

La source de lumière 26 est une source spatialement cohérente. La source de lumière 26 comporte, par exemple, une source ponctuelle telle qu'une diode électroluminescente 46, également appelée LED (de l'anglais *Light-Emitting Diode*), et un diaphragme 48 disposé au contact de la LED 46, comme représenté sur la figure 3. Le diaphragme 48 a un diamètre compris entre 50 $\mu$m et 500 $\mu$m, de préférence sensiblement égal à 100 $\mu$m, et est placé au contact de la source de lumière 26. Cela permet d'augmenter la cohérence spatiale du rayonnement lumineux. En variante, la source de lumière 26 est constituée de la diode électroluminescente 46, et ne comporte pas de diaphragme. La diode électroluminescente 46 présente alors des dimensions suffisamment réduites pour être considérée comme spatialement cohérente, le diamètre de la diode électroluminescence 46 étant inférieur au dixième de la première distance D1.

En variante encore, la source de lumière 26 est une source de lumière spatialement et temporellement cohérente, par exemple une diode laser (DL) ou encore une diode laser de type VCSEL (de l'anglais *Vertical Cavity Surface Emitting Laser*).

Le photodétecteur matriciel 28 est propre à acquérir des images du rayonnement transmis par le milieu 24 contenant les particules diffractantes 22 éclairées par le faisceau lumineux 44. Par rayonnement transmis, on entend le rayonnement traversant le milieu 24 de telle sorte que le photodétecteur matriciel 28 et la source de lumière 26 sont situés de part et d'autre du milieu 24 et des particules diffractantes 22.

Le photodétecteur matriciel 28 est un capteur d'images en deux dimensions, à savoir dans un plan perpendiculaire à l'axe vertical Z. Le photodétecteur matriciel 28 est un capteur d'images pixélisé, par exemple un capteur CMOS. En variante, le photodétecteur matriciel 28 est un capteur CCD (de l'anglais *Charged-Coupled Device*).

Le photodétecteur matriciel 28 comporte une pluralité de pixels, non représentés. Chaque pixel du photodétecteur 28 présente des dimensions inférieures ou égales à 10 $\mu$m.

Le photodétecteur matriciel 28 comporte en complément des microlentilles, non représentées, chaque microlentille étant disposée au-dessus d'un pixel correspondant. De telles microlentilles sont intégrées au capteur. Elles permettent d'améliorer le rendement de collecte et ne forment pas une optique de grossissement disposée entre la surface transparente 29 et le photodétecteur 28. Les images acquises par le photodétecteur matriciel 28 sont formées par le rayonnement transmis directement par le milieu éclairé 24, en l'absence d'une optique de grossissement disposée entre la surface transparente 29 et le photodétecteur matriciel 28. Le photodétecteur 28 est également appelé dispositif d'imagerie sans lentille, et est apte à former une image du milieu 24, tout en étant placé à une faible distance de ce dernier. Par faible distance, on entend, comme indiqué précédemment, une distance inférieure à quelques centimètres, de préférence inférieure à 1 cm, voire inférieure à 1 mm, la deuxième distance D2 étant par exemple égale à 700 $\mu$m.

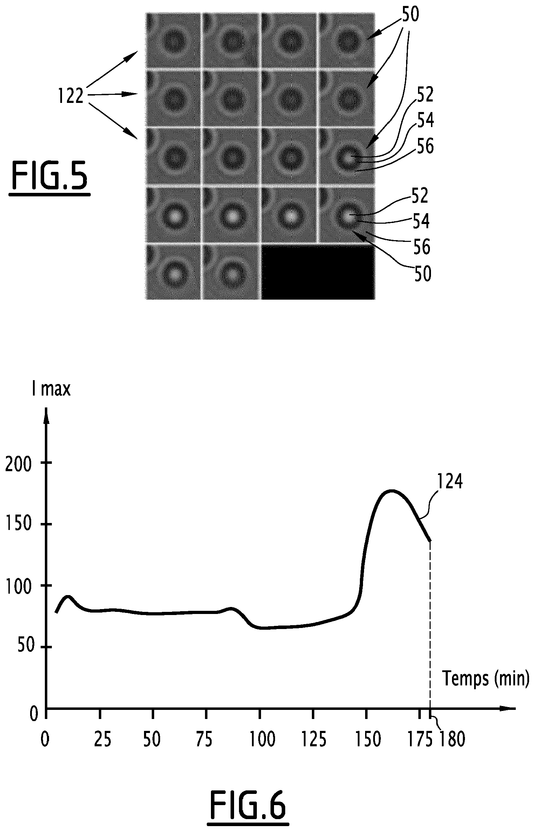

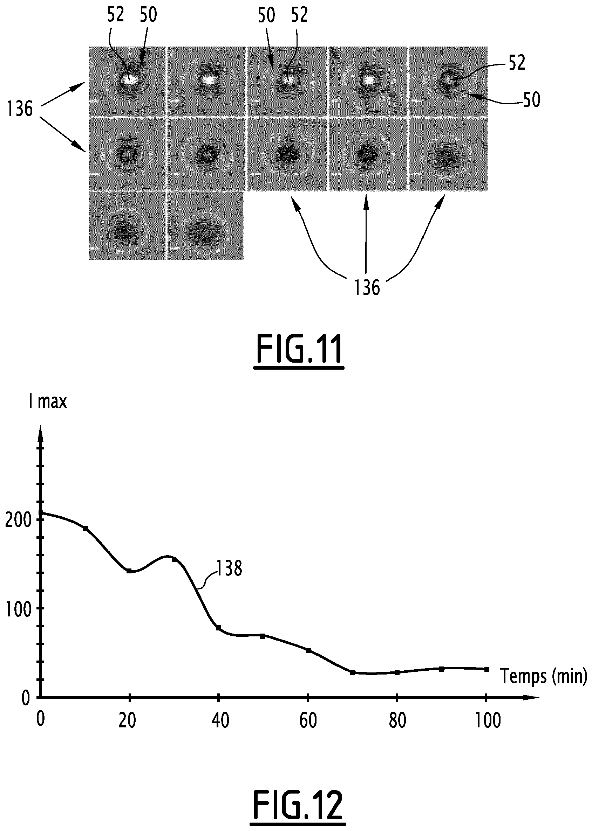

Le photodétecteur matriciel 28 est alors propre à mesurer l'intensité I d'au moins une figure de diffraction élémentaire 50 transmise par le milieu 24, la ou chaque figure de diffraction élémentaire 50, visible sur les figures 5 et 11, correspondant à des ondes diffractées par une particule diffractante 22, lors de l'éclairement du milieu 24. Ainsi, le photodétecteur matriciel permet d'obtenir une image $I_1$, dite image observée, comportant une ou plusieurs figures de diffraction élémentaires 50. L'intensité I est par exemple exprimée en niveau de gris, la valeur en niveau de gris étant comprise entre 0 et 256 dans l'exemple des figures 6, 7 et 12. Autrement dit, la valeur en niveau de gris est exprimée sur 8 bits dans cet exemple. En variante, la valeur en niveau de gris est exprimée sur un nombre de bits différent de 8, tel que sur 12 bits, sur 14 bits, ou encore sur 16 bits.

Le photodétecteur 28 est disposé à une deuxième distance D2 de la surface transparente 29 selon la direction verticale Z. La deuxième distance D2 présente une valeur comprise entre 100 $\mu$m et quelques centimètres, de préférence inférieure à 1 cm, et de préférence encore comprise entre 100 $\mu$m et 2 mm. Dans l'exemple de réalisation décrit, la deuxième distance D2 est égale à 700 $\mu$m.

Le fait de privilégier une deuxième distance D2 de faible valeur, c'est-à-dire une distance courte entre le photodétecteur matriciel 28 et la surface transparente 29, permet de limiter les phénomènes d'interférence entre différentes figures de diffraction lorsque le milieu 24 est éclairé.

La surface transparente 29 est, par exemple, en forme d'une lame transparente, présentant une épaisseur sensiblement égale à 170 $\mu$m selon la direction verticale Z. En complément facultatif, un dépôt d'une substance, favorisant l'adhésion des cellules, telle que la fibronectine, est appliqué sur la surface transparente 29, bien que cela ne soit pas indispensable.

Le premier logiciel de calcul 36 est propre à calculer, à partir d'au moins une image acquise par le photodétecteur 28 et pour au moins une particule 22, l'indicateur primaire caractérisant l'état d'adhésion de la particule 22 à la surface transparente 29, à partir de chaque figure de diffraction élémentaire 50.

L'indicateur primaire calculé est par exemple fonction de l'intensité I au centre 52 d'une figure de diffraction élémentaire 50. Les inventeurs ont en effet constaté avec surprise que l'intensité I au centre 52 d'une figure de diffraction élémentaire 50 varie en fonction de l'état de l'adhésion à la surface transparente 29 de la particule 22 correspondant à cette figure de diffraction 50, comme représenté sur la figure 5. Les inventeurs ont en particulier observé que l'intensité I au centre 52 de la figure de diffraction augmente lorsque la particule 22 adhère à la surface transparente 29.

Dans l'exemple de la figure 5, chaque figure de diffraction 50 comporte le centre 52, également appelé zone centrale, un premier anneau 54 plus sombre que le centre 52 et un deuxième anneau 56 plus clair que le premier anneau 54. D'une façon générale, chaque figure de diffraction élémentaire 50 comporte plusieurs anneaux 54, 56 concentriques, de forme circulaire ou elliptique selon la nature de la particule observée. Ces anneaux s'étendent autour d'une zone centrale 52.

L'indicateur primaire calculé est par exemple un ratio R de l'intensité du centre 52 divisé par l'intensité du deuxième anneau 56. Le terme « centre » désigne une zone d'intérêt au centre de la figure de diffraction, comportant un ou plusieurs pixel dont le niveau de gris est homogène. La particule 22 est alors considérée comme ayant adhéré à la surface transparente 22, l'état d'adhésion associé étant égal à « adhéré », lorsque la valeur du ratio R est supérieure ou égale à un premier seuil S1 prédéterminé. Le premier seuil S1 est, par exemple, égal à 1,25. Par complémentarité, lorsque la valeur du ratio R est inférieure au premier seuil S1, la particule 22 est considérée comme étant à l'écart de la surface transparente 22, l'état d'adhésion associé étant égal à « détaché ». Le premier seuil S1 peut être ajusté lors d'essais expérimentaux.

En variante, l'indicateur primaire calculé est égal à l'intensité maximale Imax du centre 52 de la figure de diffraction 50, et la particule 22 est considérée comme ayant adhéré à la surface transparente 22 lorsque la valeur de ladite intensité maximale Imax du centre 52 est supérieure ou égale à un deuxième seuil S2 prédéterminé. Le deuxième seuil S2 est, par exemple, égal à 100 lorsque la valeur du niveau de gris est comprise entre 0 et 256. De manière générale, le deuxième seuil S2 est par exemple sensiblement égal à deux cinquièmes de la dynamique de mesure. Autrement dit, pour une valeur d'intensité maximale mesurée sur 12 bits, la valeur maximale de l'intervalle de valeurs est égale à 4096, et le deuxième seuil est alors sensiblement égal 1638.

La détermination du centre 52 d'une figure de diffraction élémentaire 50 est, par exemple, effectuée manuellement, l'opérateur réalisant une sélection manuelle de la zone de l'image considérée comme représentative de la zone centrale d'une figue de diffraction. L'indicateur primaire est alors déterminé en fonction du centre 52 déterminé.

Par ailleurs, lorsque le nombre de cellules est élevé, il est possible d'établir une figure de diffraction élémentaire de référence, correspondant à une cellule ayant adhéré, c'est-à-dire comportant une zone centrale dont l'intensité moyenne est supérieure à une valeur prédéterminée. L'application d'une fonction d'autocorrélation permet d'identifier la localisation des centres de chaque figure de diffraction élémentaire présentant des caractéristiques identiques. La mise en œuvre d'un tel algorithme permet de dénombrer automatiquement le nombre de cellules adhérentes parmi une population de cellules.

Un exemple d'algorithme est le suivant.

Si $I_1(x,y)$ et $I_2(i,j)$ désignent respectivement l'image observée et une figure de diffraction élémentaire de référence, l'application d'une fonction d'autocorrélation, de préférence normée, conduit à une image de corrélation $I_3(x,y)$ telle que

$$I_3(x,y) = \frac{\sum_{i,j} I_2(i,j) \times I_1(x+i,y+j)}{\sqrt{\sum_{i,j} I_2^2(i,j) \sum_{i,j} I_1^2(x+i,y+j)}} \qquad (1)$$

Sur cette l'image $I_3$, chaque pic d'intensité dans l'image de corrélation $I_3$ correspond à la position du centre de la figure de diffraction correspondant à l'image de référence $I_2$. On obtient alors le nombre et la position des cellules adhérentes dans l'image observée $I_1$.

Autrement dit, l'intensité $I_3(x,y)$ de chaque pixel de l'image de corrélation est, par exemple, considérée comme un indicateur primaire, dont la valeur est dépendante de l'état d'adhésion d'une cellule générant une figure de diffraction élémentaire 50 centrée sur ce pixel $(x,y)$. Après un seuillage approprié, ne faisant apparaître que les pixels dont l'intensité $I_3(x,y)$ dépasse un certain seuil, seuls apparaissent les pixels correspondant au centre d'une figure de diffraction 50 générée par une cellule adhérente.

De façon complémentaire ou alternative, il est possible d'établir une figure de diffraction de référence $I_2'$, correspondant à une cellule n'ayant pas adhéré, c'est-à-dire comportant une zone centrale dont l'intensité moyenne est inférieure à une valeur prédéterminée. L'application d'une fonction d'autocorrélation, telle que précédemment décrite à l'aide de l'équation (1), permet d'obtenir une image de corrélation $I_3'$, cette dernière permettant de dénombrer et de localiser les cellules non adhérentes dans l'image observée $I_1$. La mise en œuvre d'un tel algorithme permet de dénombrer automatiquement le nombre de cellules non adhérentes parmi une population de cellules. Il permet également la localisation de ces cellules dans l'image d'observation $I_1$ obtenue par le dispositif.

En mettant en œuvre simultanément les deux algorithmes précédemment décrits, on peut établir un pourcentage de cellules adhérentes ou non adhérentes par rapport à l'ensemble des cellules.

Selon une variante, on dispose d'une pluralité de figures de diffraction de référence $I_2$, $I_2'$, $I_2''$ correspondant à différents états d'une cellule : cellule adhérente, cellule non adhérente, cellule en cours d'adhésion, la partie centrale de chaque figure de référence $I_2$, $I_2'$, $I_2''$ différant selon l'état d'adhésion de la cellule. L'algorithme d'autocorrélation mis en œuvre permet d'obtenir autant d'images de corrélation $I_3$, $I_3'$, $I_3''$ que de figures de référence. Cela permet d'identifier chaque figure de diffraction élémentaire 50 dont le motif est proche d'une figure élémentaire de référence considérée $I_2$, $I_2'$, $I_2''$. Cela permet également de déterminer les coordonnées du centre de chaque figure de diffraction élémentaire 50 ainsi identifiée.

Ainsi, la comparaison de l'image observée I1 avec une ou plusieurs figures de diffraction élémentaires de référence $I_2$, $I_2'$, $I_2''$ permet de dénombrer et de localiser l'ensemble des cellules observées sur l'image $I_1$. A partir des coordonnées, dans l'image $I_1$, du centre de chaque figure de diffraction ainsi identifiée, on définit, par exemple, une région d'intérêt autour de ce centre, auquel on applique l'indicateur primaire précédemment décrit. La région d'intérêt comprend typiquement de 10 à 1000 pixels, de préférence de 10 à 100 pixels. L'application de l'indicateur primaire permet d'identifier les cellules adhérentes parmi l'ensemble des cellules détectées.

En variante, pour détecter le centre 52 de la figure de diffraction, le premier logiciel de calcul 36 est propre à reconstruire une image des particules diffractantes à partir de l'image acquise par le photodétecteur 28, et suivant un algorithme de reconstruction holographique connu. Un tel algorithme permet à partir d'une figure de diffraction élémentaire, de reconstruire la géométrie et/ou la position de l'objet diffractant. Le premier logiciel de calcul 36 est ensuite propre à détecter dans l'image reconstruite la position correspondant au centre 52 de chaque figure de diffraction, puis à déterminer une région de l'image acquise par le photodétecteur 28, cette région comportant la figure de diffraction 50 correspondante. Le premier logiciel de calcul 36 est enfin propre à détecter le centre 52 de la figure de diffraction par correspondance avec la position détectée dans l'image reconstruite.

Le deuxième logiciel de calcul 37 est propre à calculer, à partir d'au moins une image acquise par le photodétecteur 28 et pour au moins une particule 22, au moins un indicateur secondaire S, K caractérisant l'étalement d'une cellule 22 ayant adhéré à la surface transparente 29, le ou chaque indicateur secondaire S, K étant distinct de l'indicateur primaire.

Au moins un indicateur secondaire calculé S, K est de préférence fonction d'un moment d'ordre M de la distribution X de l'intensité I d'une figure de diffraction élémentaire 50 correspondante, M étant un nombre entier de valeur supérieure ou égale à 3.

Le deuxième logiciel de calcul 37 est par exemple propre à calculer un premier indicateur secondaire S en

7

fonction du moment d'ordre 3 de l'intensité au centre 52 de la figure de diffraction correspondante. Le deuxième logiciel de calcul 37 est également propre à calculer un deuxième indicateur secondaire K en fonction du moment d'ordre 4 de ladite intensité au centre 52 de la figure de diffraction.

Le deuxième logiciel de calcul 37 est en outre propre à calculer une dérivée temporelle d'au moins un indicateur secondaire pour détecter le début de l'étalement de la cellule 22 ayant adhéré à la surface transparente 29 (de l'anglais *cell spreading*).

L'étalement de la cellule 22 correspond à un changement de forme de la cellule, celle-ci étant initialement de forme ronde lorsqu'elle baigne dans le milieu liquide 24 ou encore lorsqu'elle entre en contact avec la surface transparente 29. Après ce changement de forme qui se produit après une certaine durée d'adhésion de la cellule 22 à la surface 29, la cellule 22 prend une forme bien distincte qui varie selon la lignée cellulaire, la cellule 22 étant alors par exemple de forme oblongue, ou encore triangulaire.

Le deuxième logiciel de calcul 37 est, de manière analogue au premier logiciel de calcul 36, propre à déterminer une région de l'image acquise comportant la figure de diffraction 50 correspondante.

Le premier indicateur secondaire S vérifie alors l'équation suivante :

$$S = E\left[\left(\frac{X - \mu}{\sigma}\right)^3\right] \tag{2}$$

où X représente la distribution de l'intensité I de la région déterminée de l'image acquise comportant la figure de diffraction élémentaire 50,

μ représente la moyenne quadratique de l'intensité de ladite région déterminée, et

σ représente l'écart-type de l'intensité de ladite région déterminée.

Le deuxième indicateur secondaire K vérifie l'équation suivante :

$$K = E\left[\left(\frac{X - \mu}{\sigma}\right)^4\right] \tag{3}$$

où les paramètres X, μ et σ sont identiques à ceux de l'équation (2) précédente.

Le boitier de protection 38 est, par exemple, en forme d'un cylindre, comme représenté sur les figures 1 et 2. Le boitier de protection 38 présente une hauteur H selon la direction verticale Z, et un rayon R selon une direction radiale perpendiculaire à la direction verticale Z. La hauteur H et le rayon R du boitier 38 sont, par exemple, centimétriques.

La diode électroluminescente 46 est, par exemple, monochromatique avec une bande passante de largeur par exemple comprise entre 20 nm et 60 nm, de préférence égale à 40 nm. La diode électroluminescence 46 présente, par exemple, une longueur d'onde d'émission comprise entre 500 nm et 520 nm et une puissance de l'ordre du Watt.

Le fonctionnement du système de caractérisation 20 selon l'invention va être à présent décrit à l'aide la figure 4 représentant un organigramme du procédé de caractérisation selon l'invention.

Lors de l'étape initiale 100, le milieu liquide 24 est éclairé à l'aide de la source de lumière 26 spatialement cohérente, le faisceau lumineux 44 étant dirigé suivant la direction verticale Z.

Lors de l'étape 110, le photodétecteur matriciel 20 effectue l'acquisition séquentielle de plusieurs images de transmission $I_n(x,y)$, $I_{n+m}(x,y)$ à des instants différents n et n+m. Chaque image de transmission $I_n(x,y)$, $I_{n+m}(x,y)$ est formée par le rayonnement transmis, à l'instant d'acquisition correspondant, par le milieu liquide 24 éclairé. Autrement dit, le photodétecteur matriciel 28 mesure l'intensité I des figures de diffraction élémentaires transmises par les cellules baignant dans le milieu éclairé 24, chaque figure de diffraction élémentaire correspondant à des ondes diffractées par les particules diffractantes 22 lors de l'éclairement du milieu 24, ces ondes diffractées interférant avec l'onde incidente.

Les images $I_n(x,y)$, $I_{n+m}(x,y)$ sont, par exemple, acquises toutes les secondes pour pouvoir effectuer un suivi des particules 22, à l'aide d'un procédé de suivi de cellules (de l'anglais *cell tracking*) qui consiste par exemple à appairer dans deux images successives les particules les plus proches. Un tel procédé de suivi de cellules est par exemple décrit dans l'article « Automated tracking of migrating cells in phase-contrast video microscopy sequences using image registration » de Hand A. J.; Sun T.; Barber D. C.; Hose D. R, MacNeil S., publié dans la revue Journal of Microscopy en 2009, volume 234, en pages 62 à 79.

Les images acquises prises en compte pour le calcul de l'indicateur primaire, ou encore pour le calcul des indicateurs secondaires S, K, sont par exemple espacées temporellement d'une ou de quelques dizaines de minutes.

L'observation d'une figure de diffraction exploitable, en plaçant le photodétecteur matriciel 28 à une distance aussi faible est notamment due à l'absence d'optique de grossissement entre le milieu liquide 24 et le photodétecteur 28.

Lors de l'étape d'acquisition 110, le photodétecteur 28 est disposé à une faible distance du milieu liquide 24, la deuxième distance D2 entre le milieu liquide 24 et le photodétecteur 28 selon la direction verticale Z étant de l'ordre de quelques millimètres, et de préférence inférieure à 1cm, voire 1 mm.

A l'issue de l'étape d'acquisition 110, le premier logiciel de calcul 36 commence, lors de l'étape 120, par déterminer une région de l'image acquise $I_n(x,y)$ qui comporte une figure de diffraction 50 en comparant l'image acquise $I_n(x,y)$ avec une ou plusieurs figures élémentaires de référence $I_2$, $I_2'$, $I_2''$..., comme explicité dans le mode de réalisation précédent. Cette comparaison permet de d'identifier chaque figure de diffraction élémentaire 50 dont le motif est proche d'une figure élémentaire de référence considérée $I_2$, $I_2'$, $I_2''$. Elle permet également de déterminer les coordonnées du centre de chaque figure de diffraction élémentaire ainsi identifiée. La comparaison entre l'image acquise et la ou chaque figure élémentaire de référence $I_2$, $I_2'$, $I_2''$ consiste, par exemple, en une autocorrélation normée entre ladite image acquise et cette région de référence. Il en résulte une ou plusieurs images de corrélation $I_3$, $I_3'$, $I_3''$, dont chaque pic d'intensité correspond au centre d'une figure élémentaire 50 dont le motif correspond à la figure élémentaire de référence $I_2$, $I_2'$, $I_2''$ considérée.

Ainsi, la comparaison de l'image observée $I_1$ avec une ou plusieurs figures de diffraction élémentaires de référence $I_2$, $I_2'$, $I_2''$ permet de dénombrer et de localiser l'ensemble des cellules observées sur l'image $I_1$.

A partir des coordonnées, dans l'image $I_1$, du centre de chaque figure de diffraction ainsi identifiée, on peut définir une région d'intérêt autour de ce centre, auquel on applique l'indicateur secondaire précédemment évoqué. La mise en œuvre de l'indicateur secondaire nécessite une région d'intérêt plus étendue que lorsqu'on met en œuvre l'indicateur primaire. Par exemple, la zone d'intérêt est un carré de 40 * 40 pixels.

De façon alternative, l'identification de chaque figure élémentaire de référence sur l'image $I_1$ est réalisée manuellement, de même que la sélection d'une région d'intérêt correspondant à chaque figure élémentaire ainsi identifiée.

La figure 5 illustre une pluralité de régions d'intérêt 122 ainsi déterminées pour une même particule 22 à partir d'images acquises toutes les 10 minutes, ladite particule 22 étant suivie à l'aide du procédé de suivi décrit précédemment. Chaque région déterminée 122 comporte la figure de diffraction 50 associée à ladite particule 22.

En variante, pour détecter le centre 52 de la figure de diffraction, le premier logiciel de calcul 36 reconstruit une image des particules 22 à partir de l'image acquise $I_n(x,y)$ par le photodétecteur 28, et suivant un algorithme de reconstruction holographique connu, permettant, à partir d'une figure de diffraction élémentaire 50, de reconstruire la géométrie et/ou la position de l'objet diffractant. L'algorithme de reconstruction est par exemple décrit en page 10, ligne 7 à page 11, ligne 3 de la demande FR 12 56816 déposée le 13 juillet 2012 par la demanderesse de la présente demande. Le premier logiciel de calcul 36 est ensuite propre à détecter dans l'image reconstruite la position correspondant au centre 52 de chaque figure de diffraction, puis à déterminer une région de l'image acquise par le photodétecteur 28, cette région comportant la figure de diffraction 50 correspondante. Le premier logiciel de calcul 36 est enfin propre à détecter le centre 52 de la figure de diffraction par correspondance avec la position détectée dans l'image reconstruite. De manière analogue à ce qui a été décrit précédemment, la région ainsi déterminée est alors une région d'intérêt, de forme et de taille prédéfinies, par exemple un carré de 40 pixels de côté, disposée autour de la position détectée du centre 52 de la figure de diffraction.

Le premier logiciel de calcul 36 calcule alors l'indicateur primaire, celui-ci étant par exemple à l'intensité maximale Imax du centre 52 de la figure de diffraction, et la particule 22 est considérée comme ayant adhéré à la surface transparente 22 lorsque la valeur de ladite intensité maximale Imax du centre 52 est supérieure ou égale au deuxième seuil S2 prédéterminé.

Dans l'exemple de réalisation de la figure 6, une courbe 124 représente l'évolution de l'intensité maximale Imax dans les régions d'intérêt 122 déterminées au cours du temps, et l'adhésion de la particule 22 correspond à un instant temporel légèrement inférieur à 150 minutes, le deuxième seuil S2 étant sensiblement égal à 100. On rappelle que chaque région d'intérêt s'étend autour du centre d'une figure de diffraction élémentaire 50 de l'image observée $I_1$. Le procédé permet alors d'établir une cinétique d'adhésion.

En variante, le premier logiciel de calcul 36 calcule l'indicateur primaire sous forme du ratio R de l'intensité du centre 52 divisé par l'intensité du deuxième anneau 56. La particule 22 est alors considérée comme ayant adhéré à la surface transparente 22, l'état d'adhésion associé étant égal à « adhéré », lorsque la valeur du ratio R est supérieure ou égale au premier seuil S1 prédéterminé. La valeur de l'intensité du deuxième anneau est aisément évaluable en réalisant un profil de la région d'intérêt, ou en sélectionnant une zone d'intérêt supplémentaire réduite, limitée à une portion du deuxième anneau, et en déterminant le niveau d'intensité moyen de cette zone d'intérêt supplémentaire réduite.

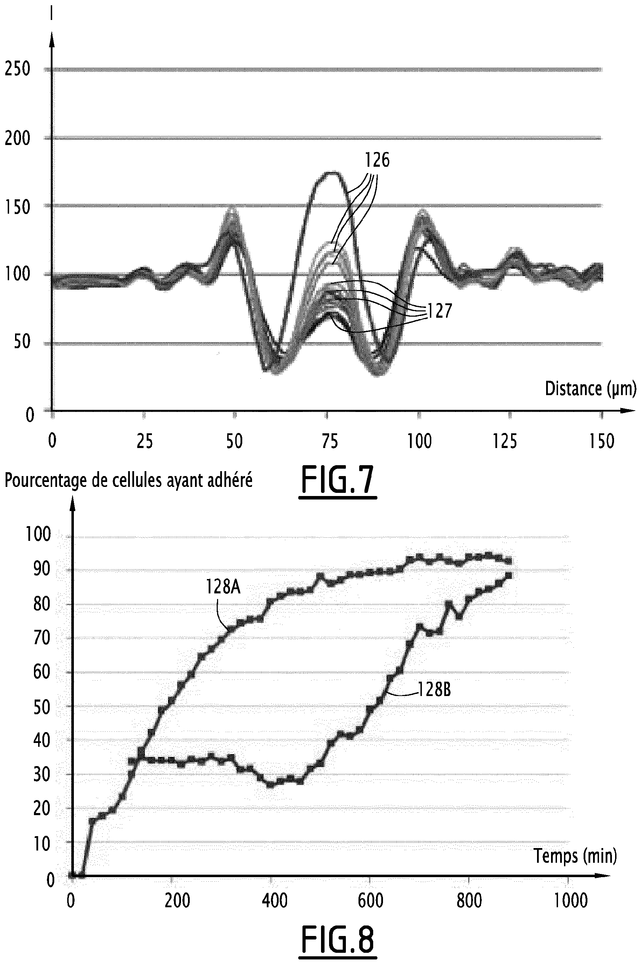

Dans l'exemple de réalisation de la figure 7, plusieurs profils horizontaux 126, 127 correspondent aux régions 122 représentées dans la figure 5. Chaque profil représente l'intensité sur une ligne horizontale passant par le centre de l'image à laquelle il se rapporte, le centre 52 de la figure de diffraction correspondant sensiblement à la coordonnée 75 $\mu m$. Chaque région déterminée 122 prise en compte contient la figure de diffraction élémentaire 50 correspondant à la même particule 22, ladite particule 22 étant suivie à l'aide du procédé de suivi décrit précédemment. On dispose alors de l'évolution temporelle de la figure de diffraction 50 produite par la particule 22. Le deuxième anneau 56 est sensiblement centré sur le centre 52, et correspond aux coordonnées sensiblement égales à 50 μm et 100 μm sur la figure 7. Autrement dit, dans l'exemple de la figure 7, le deuxième anneau 56 présente un rayon d'environ 25 μm.

Sur la figure 7, on observe, d'une part, un ensemble de premières courbes 126 pour lesquelles l'intensité au voisinage du centre 52, c'est-à-dire l'intensité autour de la coordonnée 75 μm, est supérieure au deuxième seuil S2, et d'autre part, un ensemble de deuxièmes courbes 127 pour lesquelles l'intensité au voisinage du centre 52 est inférieure au deuxième seuil S2. Ce seuil S2 est ici égal à 100. Pour les premières courbes 126, la valeur du ratio R est également supérieure à un premier seuil S1, et pour les deuxièmes courbes 127 la valeur du ratio R est inférieure au premier seuil S1. Autrement dit, les premières courbes 126 correspondent à la période temporelle au cours de laquelle la particule 22 correspondante adhère à la surface 29, et les deuxièmes courbes 127 correspondent à la période temporelle au cours de laquelle la particule 22 correspondante est à l'écart de ladite surface 29.

Le procédé de caractérisation selon l'invention permet alors de déterminer, au cours du temps et à l'aide de l'indicateur primaire, un pourcentage de particules 22, telles que des cellules, ayant adhéré à la surface transparente 29, comme représenté sur la figure 8. Il est alors possible de caractériser une première population de cellules 22 par rapport à une deuxième population de cellules 22 en comparant la vitesse d'adhésion à la surface transparente 29 des cellules 22 de chacune des populations. A titre d'exemple sur la figure 8, une première courbe 128A et une deuxième courbe 128B représentent chacune, en fonction du temps, le pourcentage de cellules 22 ayant adhéré à la surface transparente 29, la première courbe 128A étant associée à la première population pour laquelle le pourcentage de cellules ayant adhéré croît plus rapidement que celui correspondant à la deuxième population associée à la deuxième courbe 128B.

L'étape de calcul de l'indicateur primaire 120 est mise en œuvre par le système de caractérisation 20 avec une périodicité par exemple de l'ordre de 10 minutes, et le système de caractérisation 20 retourne à l'étape 110 d'acquisition à l'issue de chaque étape de calcul 120, ou bien passe à l'étape 130 de calcul d'au moins un indicateur secondaire caractérisant l'étalement de la cellule 22 lorsque par exemple l'état d'adhésion pour ladite particule est égal à « adhéré ».

Lors de l'étape 130, le deuxième logiciel de calcul 37 calcule alors, à partir d'au moins une image acquise $I_n(x,y)$ par le photodétecteur 28 et pour au moins une particule 22, au moins un indicateur secondaire S, K caractérisant l'étalement la cellule 22 ayant adhéré à la surface transparente 29.

Le deuxième logiciel de calcul 37 commence par exemple par calculer le premier indicateur secondaire S en fonction du moment d'ordre 3 de l'intensité au centre 52 de la figure de diffraction correspondante, de préférence à l'aide de l'équation (2).

La région de l'image acquise comportant la figure de diffraction 50 est déterminée de manière analogue à ce qui a été décrit précédemment pour l'étape de calcul 120. Lors de l'étape précédente 120, les régions déterminées 122 pour une particule 22 donnée sont de préférence stockées dans la mémoire 34 de l'unité de traitement d'informations afin de servir au calcul des indicateurs secondaires S, K lors de l'étape suivante 130. En variante, le deuxième logiciel de calcul 37 détermine à nouveau lesdites régions de l'image acquise comportant les figures de diffraction 50.

Le deuxième logiciel de calcul 37 calcule ensuite le deuxième indicateur secondaire K en fonction du moment d'ordre 4 de ladite intensité au centre 52 de la figure de diffraction correspondante, de préférence à l'aide de l'équation (3).

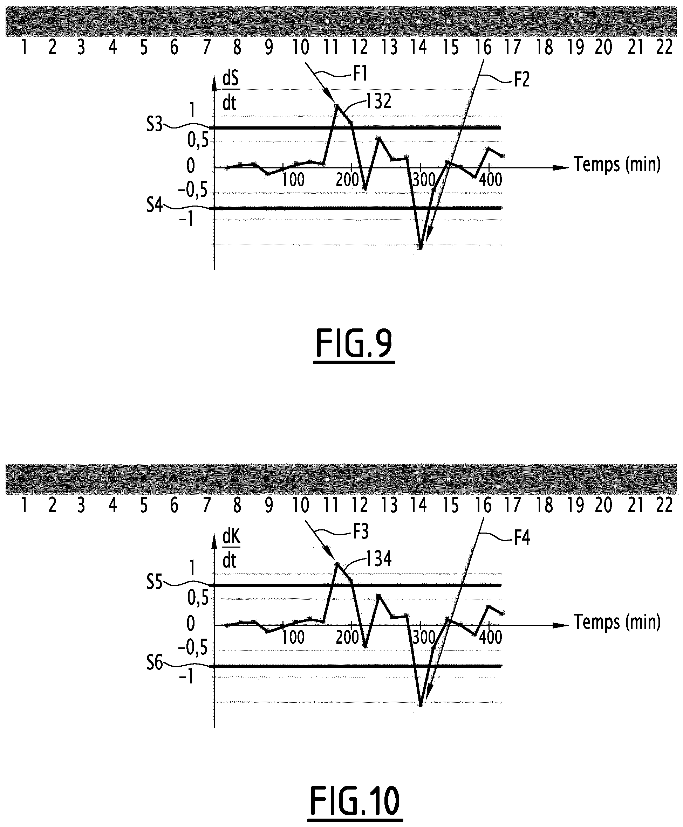

En complément, le deuxième logiciel de calcul 37 calcule ensuite la dérivée temporelle de l'un ou de chacun des indicateurs secondaires S, K pour déterminer un début de l'étalement de la cellule 22 ayant adhéré à la surface transparente 29, comme représenté sur les figures 9 et 10.

Les inventeurs ont alors constaté que le dépassement d'un troisième seuil S3 par la dérivée temporelle dS/dt du premier indicateur secondaire S correspond à l'adhésion de la particule 22 à la surface transparente 29, comme cela est visible sur la figure 9 où la courbe 132 représente ladite dérivée temporelle dS/dt du premier indicateur secondaire. Le dépassement du troisième seuil S3 correspond en effet à la transition de la région numérotée 9 à la région numérotée 10 (flèche F1), cette transition correspondant elle-même à l'adhésion de la particule 22 à la surface 29. Dans l'exemple de la figure 9, la valeur du troisième seuil S3 est sensiblement égale à 0,75.

Le moment où la dérivée temporelle dS/dt du premier indicateur secondaire est ensuite inférieure à un quatrième seuil S4 correspond au début de l'étalement de la cellule 22 observée, c'est-à-dire au changement de forme de la cellule ayant adhéré à la surface 29 dans le cas où la particule 22 est une cellule. Sur la figure 9, le franchissement du quatrième seuil S4 correspond à la transition de la région numérotée 15 à la région numérotée 16 (flèche F2), cette transition correspondant elle-même à un changement de forme de la figure de diffraction 50, qui traduit le changement de forme de la cellule 22 ayant adhéré à la surface 29. Dans l'exemple de la figure 9, la valeur du quatrième seuil S4 est sensiblement égale à -0,75.

De manière analogue, les inventeurs ont remarqué que le dépassement d'un cinquième seuil S5 par la dérivée temporelle dS/dt du deuxième indicateur secondaire K correspond à l'adhésion de la particule 22 à la surface transparente 29, comme cela est visible sur la figure 10 où la courbe 134 représente ladite dérivée temporelle dK/dt du deuxième indicateur secondaire. Le dépassement du cinquième seuil S5 correspond à la transition de la région numérotée 9 à la région numérotée 10 (flèche F3) sur la figure 10, cette transition correspondant elle-même à l'adhésion de la particule

22 à la surface 29. Dans l'exemple de la figure 10, la valeur du cinquième seuil S5 est sensiblement égale à 0,75.

Le moment où la dérivée temporelle dK/dt du deuxième indicateur secondaire est ensuite inférieure à un sixième seuil S6 correspond également au début de l'étalement de la cellule 22 observée. Sur la figure 10, le franchissement du sixième seuil S6 correspond à la transition de la région numérotée 15 à la région numérotée 16 (flèche F4), cette transition correspondant elle-même au changement de forme de la figure de diffraction 50, qui traduit le changement de forme de la cellule 22 ayant adhéré à la surface 29. Dans l'exemple de la figure 10, la valeur du sixième seuil S6 est sensiblement égale à -0,75.

L'étape 130 de calcul des indicateurs secondaires S, K est mise en œuvre par le système de caractérisation 20 avec une périodicité par exemple de l'ordre de 20 minutes, et le système de caractérisation 20 retourne à l'étape 110 d'acquisition à l'issue de chaque étape de calcul 130.

L'homme du métier comprendra que les étapes de calcul 120, 130 sont réalisées de manière successive comme cela est représenté sur la figure 4, ou bien sont effectuées en parallèle l'une de l'autre à partir des images acquises lors de l'étape 110.

Le procédé de caractérisation et le système de caractérisation 20 selon l'invention permettent alors de caractériser l'adhésion d'une particule donnée 22 à la surface transparente 29, et le cas échéant de caractériser en outre l'étalement de la cellule 22 ayant adhéré à la surface transparente 29, comme cela a été décrit précédemment notamment en regard des figures 5 à 10.

En complément, et par complémentarité, le procédé de caractérisation et le système de caractérisation 20 selon l'invention permettent également de caractériser le détachement de la particule 22 ayant adhéré à la surface transparente 29, comme représenté sur les figures 11 et 12. Le détachement de la particule 22 correspond à une absence d'adhésion de ladite particule à la surface 29 à la suite d'une période temporelle au cours de laquelle la particule 22 a adhéré à la surface transparente 29. Ce détachement est caractérisé à l'aide de l'indicateur primaire, la valeur de l'état d'adhésion passant alors pour ladite particule 22 de l'état « adhéré » à l'état « détaché ».

La figure 11 est une vue analogue à celle de la figure 5 lors du détachement de la particule 22 par rapport à la surface transparente 29, la figure 11 représentant une pluralité de régions 136 déterminées toutes les 10 minutes au cours d'une période temporelle de 100 minutes, la détermination des régions 136 étant analogue à ce qui a été décrit précédemment pour l'étape de calcul 120.

Sur la figure 11, on observe que l'intensité I au centre 52 de la figure de diffraction est élevée au début de la période temporelle lorsque la particule 22 est encore adhérée à la surface 29, puis que cette intensité diminue au cours du temps. Ceci se traduit par exemple par une baisse de l'intensité maximale Imax au centre 52 de la figure de diffraction qui devient alors inférieure au deuxième seuil S2, ce qui indique que l'état d'adhésion est alors égal à l'état « détaché », et autrement dit que la particule 22 s'est détachée de la surface 29, comme représenté sur la figure 12.

Dans l'exemple de réalisation de la figure 12, une courbe 138 représente l'évolution de l'intensité maximale Imax dans les régions 136 déterminées au cours du temps, et le détachement de la particule 22 correspond à un instant temporel légèrement inférieur à 40 minutes, le deuxième seuil S2 étant sensiblement égal à 100 dans cet exemple. Cet instant correspond à la transition entre la quatrième région déterminée 136 et la cinquième région déterminée 136 sur la figure 11, transition pour laquelle on observe une diminution importante de l'intensité au centre 52 de la figure de diffraction.

Le système de caractérisation 20 selon l'invention est alors apte à caractériser l'adhésion de la particule 22 à la surface transparente 29 lorsque ladite particule 22 se déplace en direction de cette surface, mais également le détachement d'une particule 22 par rapport à la surface 29 à laquelle la particule a préalablement adhéré.

Le système de caractérisation 20 selon l'invention permet en outre de détecter l'étalement de la cellule 22 qui correspond à un changement de forme de la cellule, celle-ci étant initialement de forme ronde, puis prenant, après une certaine durée d'adhésion à la surface 29, une forme bien distincte qui varie selon la lignée cellulaire, la cellule 22 étant alors par exemple de forme oblongue, ou encore triangulaire.

Le système de caractérisation 20 selon l'invention est particulièrement peu coûteux, puisque la source de lumière 26 est par exemple formée d'une simple diode électroluminescente 46 couplée à un diaphragme 48, et que le photodétecteur matriciel 28 est un capteur classique de type CMOS ou CCD qui ne nécessite pas de présenter une résolution élevée.

Le système de caractérisation 20 selon l'invention présente en outre un encombrement particulièrement réduit, les dimensions du boîtier de protection 38 étant centimétriques.

Le système de caractérisation 20 selon l'invention est en outre très facile à mettre en œuvre, comme cela a été décrit précédemment, l'adhésion ou le détachement d'une particule donnée 22 étant caractérisé à l'aide du seul indicateur primaire, l'étalement de la cellule 22 ayant adhéré à la surface 29 étant apte à être caractérisé à l'aide d'un seul des deux indicateurs secondaires S, K.

On conçoit ainsi que le procédé de caractérisation et le système de caractérisation 20 selon l'invention sont moins coûteux et plus faciles à mettre en œuvre.

**Revendications**

1.  Procédé de caractérisation d'un état d'adhésion d'au moins une particule (22), à l'aide d'un système (20) comprenant une source de lumière spatialement cohérente (26) et un photodétecteur matriciel (28), la ou les particules (22), telles que des cellules, étant contenues dans un milieu liquide (24), le milieu liquide (24) étant délimité par une surface transparente (29), la ou les particules (22) étant propres à adhérer à ladite surface transparente (29), le photodétecteur matriciel (28) étant propre à mesurer la distribution (X) de l'intensité (I) d'au moins une figure de diffraction (50),
    le procédé comprenant les étapes suivantes :

    - l'éclairement (100) du milieu (24) par la source de lumière spatialement cohérente (26),
    - l'acquisition (110) d'au moins une image ($I_1(x,y)$, $I_n(x,y)$) par le photodétecteur matriciel (28), l'image ($I_1(x,y)$, $I_n(x,y)$) étant formée par un rayonnement transmis par le milieu éclairé et comportant au moins une figure de diffraction élémentaire (50), chaque figure de diffraction élémentaire (50) correspondant à des ondes diffractées par une particule (22) lors de l'éclairement du milieu (24),
    - le calcul (120), à partir d'au moins une image acquise ($I_1(x,y)$, $I_n(x,y)$) et pour au moins une particule (22), d'un indicateur primaire caractérisant l'état d'adhésion de la particule (22) à la surface transparente (29),

    le procédé étant **caractérisé en ce qu'**il comprend en outre l'étape suivante :

    - le calcul (130), à partir d'au moins une image acquise ($I_n(x,y)$) et pour au moins une particule (22), d'au moins un indicateur secondaire (S, K) caractérisant l'étalement d'une cellule (22) ayant adhéré à la surface transparente, le ou chaque indicateur secondaire (S, K) étant distinct de l'indicateur primaire, au moins un indicateur secondaire calculé (S, K) étant fonction d'un moment d'ordre M de l'intensité au centre (52) d'une figure de diffraction (50) correspondante, M étant un nombre entier de valeur supérieure ou égale à 3 ; et en outre de la dérivée temporelle (dS/dt, dK/dt) d'au moins un indicateur secondaire calculé (S, K) pour détecter l'étalement de la cellule ayant adhéré à la surface transparente.

2.  Procédé selon la revendication 1, dans lequel le photodétecteur matriciel (28) est propre à mesurer l'intensité (I) d'au moins une figure de diffraction (50), et
    dans lequel l'indicateur primaire calculé est fonction de l'intensité au centre (52) d'une figure de diffraction (50) correspondante.

3.  Procédé selon la revendication 2, dans lequel une particule est déterminée comme adhérente lorsque la valeur dudit indicateur primaire dépasse un seuil.

4.  Procédé selon l'une quelconque des revendications précédentes, dans lequel l'étape de calcul du ou de chaque indicateur primaire (120) comporte la localisation, sur l'image acquise ($I_n(x,y)$), du centre (52) de chaque figure de diffraction élémentaire (50) correspondant à une figure prédéterminée ($I_2$, $I_2'$, $I_2''$).

5.  Procédé selon l'une quelconque des revendications précédentes, dans lequel l'étape de calcul du ou de chaque indicateur primaire (120) comporte la localisation, sur l'image acquise ($I_n(x,y)$), du centre d'une figure de diffraction élémentaire (50), cette localisation étant réalisée à partir :

    - d'une reconstruction d'une image de la particule (22) associée à ladite figure de diffraction élémentaire, en mettant en œuvre un algorithme de reconstruction, puis
    - de la détection dans l'image reconstruite, de la position correspondant au centre (52) de ladite figure de diffraction élémentaire (50).

6.  Procédé selon la revendication 4 ou 5, dans lequel le procédé comprend en outre la définition d'une région d'intérêt (122, 136) autour du centre (52) de chaque figure de diffraction élémentaire.

7.  Procédé selon l'une quelconque des revendications précédentes, dans lequel un premier indicateur secondaire (S) calculé est fonction du moment d'ordre 3 de l'intensité au centre (52) de la figure de diffraction correspondante.

8.  Procédé selon la revendication 7, dans lequel l'étape (130) de calcul du ou de chaque premier indicateur secondaire (S) comporte la détermination d'une région d'intérêt (122) de l'image acquise comportant la figure de diffraction (50) correspondante, et le ou chaque premier indicateur secondaire (S) vérifie l'équation suivante :

$$S = E\left[\left(\frac{X - \mu}{\sigma}\right)^{3}\right]$$

où X représente la distribution de l'intensité de ladite région d'intérêt (122) déterminée, μ représente la moyenne quadratique de l'intensité de la région déterminée (122), et σ représente l'écart-type de l'intensité de la région déterminée (122).

9. Procédé selon l'une quelconque des revendications précédentes, dans lequel un deuxième indicateur secondaire calculé (K) est fonction du moment d'ordre 4 de l'intensité au centre (52) de la région d'intérêt (122) correspondante.

10. Procédé selon la revendication 9, dans lequel l'étape de calcul du ou de chaque deuxième indicateur secondaire (K) comporte la détermination d'une région (122) de l'image acquise comportant la figure de diffraction (50) correspondante, et le ou chaque deuxième indicateur secondaire (K) vérifie l'équation suivante :

$$K = E\left[\left(\frac{X - \mu}{\sigma}\right)^{4}\right]$$

où X représente la distribution de l'intensité de ladite région d'intérêt (122) déterminée, μ représente la moyenne quadratique de l'intensité de la région d'intérêt déterminée (122), et σ représente l'écart-type de l'intensité de la région d'intérêt déterminée (122).

11. Système (20) de caractérisation d'un état d'adhésion d'au moins une particule (22), la ou les particules (22), telles que des cellules, étant contenues dans un milieu liquide (24), le milieu liquide (24) étant délimité par une surface transparente (29), la ou les particules (22) étant propres à adhérer à ladite surface transparente (29), le système (20) comprenant :

    - une source de lumière spatialement cohérente (26) propre à émettre un faisceau lumineux pour éclairer le milieu liquide (24),
    - un photodétecteur matriciel (26) propre à acquérir au moins une image ($I_n(x,y)$) d'un rayonnement transmis par le milieu éclairé, l'image ($I_n(x,y)$) comportant au moins une figure de diffraction (50), chaque figure de diffraction (50) correspondant à des ondes diffractées par une particule (22) du milieu éclairé, le photodétecteur matriciel (28) étant propre à mesurer la distribution (X) de l'intensité (I) d'au moins une figure de diffraction (50), et
    - une unité de traitement d'informations (30) comportant des moyens (36) de calcul, à partir d'au moins une image acquise ($I_n(x,y)$) et pour au moins une particule (22), d'un indicateur primaire caractérisant l'état d'adhésion de la particule (22) à la surface transparente (29),

le système étant **caractérisé en ce que** l'unité de traitement d'informations (30) comporte en outre des moyens (37) de calcul, à partir d'au moins une image acquise ($I_n(x,y)$) et pour au moins une particule (22), d'au moins un indicateur secondaire (S, K) caractérisant l'étalement d'une cellule (22) ayant adhéré à la surface transparente, le ou chaque indicateur secondaire (S, K) étant distinct de l'indicateur primaire, au moins un indicateur secondaire calculé (S, K) étant fonction d'un moment d'ordre M de l'intensité au centre (52) d'une figure de diffraction (50) correspondante, M étant un nombre entier de valeur supérieure ou égale à 3 ; et de calcul de la dérivée temporelle (dS/dt, dK/dt) d'au moins un indicateur secondaire calculé (S, K) pour détecter l'étalement de la cellule ayant adhéré à la surface transparente.

**Patentansprüche**

1. Verfahren zur Charakterisierung eines Adhäsionszustandes mindestens eines Partikels (22) mit Hilfe eines Systems (20), das eine räumlich kohärente Lichtquelle (26) und einen Matrix-Photodetektor (28) umfasst, wobei das Partikel oder die Partikel (22), wie Zellen, in einem flüssigen Medium (24) enthalten sind, wobei das flüssige Medium (24) durch eine transparente Fläche (29) begrenzt ist, wobei das Partikel oder die Partikel (22) geeignet sind, an der transparenten Fläche (29) zu haften, wobei der Matrix-Photodetektor (28) geeignet ist, die Verteilung (X) der Intensität (I) mindestens eines Beugungsmusters (50) zu messen,

wobei das Verfahren die folgenden Schritte umfasst:

- Beleuchten (100) des Mediums (24) durch die räumlich kohärente Lichtquelle (26),
- Erfassen (110) mindestens eines Bildes ($I_1(x,y)$, $I_n(x,y)$) durch den Matrix-Photodetektor (28), wobei das Bild ($I_1(x,y)$, $I_n(x,y)$) durch Strahlung gebildet wird, die durch das beleuchtete Medium durchgelassen wird, und mindestens ein elementares Beugungsmuster (50) aufweist, wobei jedes elementare Beugungsmuster (50) Wellen entspricht, die von einem Partikel (22) gebeugt werden, wenn das Medium (24) beleuchtet wird,
- Berechnen (120) eines primären Indikators, der den Zustand der Adhäsion des Partikels (22) an der transparenten Fläche (29) charakterisiert, aus mindestens einem erfassten Bild ($I_1(x,y)$, $I_n(x,y)$) und für mindestens ein Partikel (22),

wobei das Verfahren **dadurch gekennzeichnet ist, dass** es weiterhin den folgenden Schritt umfasst:

- Berechnen (130) aus mindestens einem erfassten Bild ($I_n(x,y)$) und für mindestens ein Partikel (22) mindestens eines sekundären Indikators (S, K), der die Ausbreitung einer an der transparenten Fläche haftenden Zelle (22) charakterisiert, wobei der oder jeder sekundäre Indikator (S, K) von dem primären Indikator verschieden ist, wobei mindestens ein berechneter sekundärer Indikator (S, K) eine Funktion eines Ordnungsmoments M der Intensität im Zentrum (52) eines entsprechenden Beugungsmusters (50) ist, wobei M eine ganze Zahl mit einem Wert größer oder gleich 3 ist; und außerdem der zeitlichen Ableitung (dS/dt, dK/dt) mindestens eines berechneten sekundären Indikators (S, K) zum Erfassen der Ausbreitung der an der transparenten Fläche haftenden Zelle.

2. Verfahren nach Anspruch 1, bei dem der Matrix-Photodetektor (28) zur Messung der Intensität (I) mindestens eines Beugungsmusters (50) ausgebildet ist, und

wobei der berechnete primäre Indikator eine Funktion der Intensität im Zentrum (52) eines entsprechenden Beugungsmusters (50) ist.

3. Verfahren nach Anspruch 2, bei dem ein Partikel als anhaftend bestimmt wird, wenn der Wert des primären Indikators einen Schwellenwert überschreitet.

4. Verfahren nach einem beliebigen der vorhergehenden Ansprüche, bei dem der Schritt des Berechnens des oder jedes primären Indikators (120) das Lokalisieren des Zentrums (52) jedes elementaren Beugungsmusters (50), das einem vorbestimmten Muster ($I_2$, $I_2$', $I_2$") entspricht, auf dem erfassten Bild ($I_n(x,y)$) aufweist.

5. Verfahren nach einem beliebigen der vorhergehenden Ansprüche, bei dem der Schritt des Berechnens des oder jedes primären Indikators (120) das Lokalisieren des Zentrums eines elementaren Beugungsmusters (50) auf dem erfassten Bild ($I_n(x,y)$) aufweist, wobei dieses Lokalisieren durchgeführt wird aus:

- einer Rekonstruktion eines Bildes des Partikels (22), das dem elementaren Beugungsmuster zugeordnet ist, wobei ein Rekonstruktionsalgorithmus ausgeführt wird, dann
- dem Detektieren der Position in dem rekonstruierten Bild, die dem Zentrum (52) des genannten elementaren Beugungsmusters (50) entspricht.

6. Verfahren nach Anspruch 4 oder 5, bei dem das Verfahren außerdem das Definieren eines Bereichs von Interesse (122, 136) um das Zentrum (52) jedes elementaren Beugungsmusters umfasst.

7. Verfahren nach einem beliebigen der vorhergehenden Ansprüche, bei dem ein berechneter erster sekundärer Indikator (S) eine Funktion des Moments dritter Ordnung der Intensität im Zentrum (52) des entsprechenden Beugungsmusters ist.

8. Verfahren nach Anspruch 7, bei dem der Schritt (130) des Berechnens des oder jedes ersten sekundären Indikators (S) das Bestimmen eines Bereichs von Interesse (122) des erfassten Bildes aufweist, der das entsprechenden Beugungsmusters (50) aufweist, und der oder jeder erste

$$S = E\left[\left(\frac{X - \mu}{\sigma}\right)^3\right]$$

sekundäre Indikator (S) die folgende Gleichung erfüllt:

wobei X die Verteilung der Intensität des ermittelten Bereichs von Interesse (122) darstellt, $\mu$ den quadratischen Mittelwert der Intensität des ermittelten Bereichs (122) darstellt und $\sigma$ die Standardabweichung der Intensität des ermittelten Bereichs (122) darstellt.

9. Verfahren nach einem beliebigen der vorhergehenden Ansprüche, bei dem ein berechneter zweiter sekundärer Indikator (K) eine Funktion des Moments vierter Ordnung der Intensität im Zentrum (52) des entsprechenden Bereichs von Interesse (122) ist.

10. Verfahren nach Anspruch 9, bei dem der Schritt des Berechnens des oder jedes zweiten sekundären Indikators (K) das Bestimmen eines Bereichs (122) des erfassten Bildes aufweist, der das entsprechende Beugungsmuster (50) aufweist, und der oder jeder zweite sekundäre Indikator (K) die folgende Gleichung erfüllt:

$$K = E\left[\left(\frac{X - \mu}{\sigma}\right)^4\right]$$

wobei X die Verteilung der Intensität des ermittelten Bereichs von Interesse (122) darstellt, $\mu$ den quadratischen Mittelwert der Intensität des ermittelten Bereichs von Interesse (122) darstellt und $\sigma$ die Standardabweichung der Intensität des ermittelten Bereichs von Interesse (122) darstellt.

11. System (20) zur Charakterisierung eines Adhäsionszustandes mindestens eines Partikels (22), wobei das Partikel oder die Partikel (22), wie Zellen, in einem flüssigen Medium (24) enthalten sind, wobei das flüssige Medium (24) durch eine transparente Fläche (29) begrenzt ist, wobei das Partikel oder die Partikel (22) geeignet sind, an der transparenten Fläche (29) zu haften,
wobei das System (20) umfasst:

- eine räumlich kohärente Lichtquelle (26), die geeignet ist, einen Lichtstrahl auszusenden, um das flüssige Medium (24) zu beleuchten,
- einen Matrix-Photodetektor (26), der geeignet ist, mindestens ein Bild ($I_n(x,y)$) der durch das beleuchtete Medium durchgelassenen Strahlung zu erfassen, wobei das Bild ($I_n(x,y)$) mindestens ein Beugungsmuster (50) aufweist und jedes Beugungsmuster (50) den von einem Partikel (22) des beleuchteten Mediums gebeugten Wellen entspricht, wobei der Matrix-Photodetektor (28) geeignet ist, die Verteilung (X) der Intensität (I) mindestens eines Beugungsmusters (50) zu messen, und
- eine Informationsverarbeitungseinheit (30), die Mittel (36) zum Berechnen aus mindestens einem erfassten Bild ($I_n(x,y)$) und für mindestens ein Partikel (22) eines primären Indikators aufweist, der den Zustand der Adhäsion des Partikels (22) an der transparenten Fläche (29) charakterisiert,

wobei das System **dadurch gekennzeichnet ist, dass** die Informationsverarbeitungseinheit (30) außerdem Mittel (37) zum Berechnen aus mindestens einem erfassten Bild ($I_n(x,y)$) und für mindestens ein Partikel (22) mindestens eines sekundären Indikators (S, K) aufweist, der die Ausbreitung einer Zelle (22) charakterisiert, die an der transparenten Fläche angehaftet hat, wobei der oder jeder sekundäre Indikator (S, K) von dem primären Indikator verschieden ist, wobei mindestens ein berechneter sekundärer Indikator (S, K) eine Funktion eines Ordnungsmoments M der Intensität im Zentrum (52) eines entsprechenden Beugungsmusters (50) ist, wobei M eine ganze Zahl mit einem Wert größer oder gleich 3 ist; und zum Berechnen der zeitliche Ableitung (dS/dt, dK/dt) mindestens eines berechneten sekundären Indikators (S, K) zum Erfassen der Ausbreitung der an der transparenten Fläche haftenden Zelle.

**Claims**

1. A method for characterizing a state of adhesion of at least one particle (22), via a system (20) comprising a spatially coherent light source (26) and a matrix photodetector (28), the particle(s) (22), such as cells, being contained in a liquid medium (24), the liquid medium (24) being delimited by a transparent surface (29), the particle(s) (22) being able to adhere to said transparent surface (29), the matrix photodetector (28) being able to measure the distribution (X) of the intensity (I) of at least one diffraction pattern (50),
the method comprising the following steps:

- illuminating (100) the medium (24) with the spatially coherent light source (26),
- acquiring (110) at least one image ($I_1(x, y)$, $I_n(x, y)$) by the matrix photodetector (28), the image ($I_1(x, y)$, $I_n(x, y)$) being formed by radiation transmitted by the illuminated medium and including at least one elementary diffraction pattern (50), each elementary diffraction pattern (50) corresponding to waves diffracted by a particle (22) during the illumination of the medium (24),
- computing (120), from at least one acquired image ($I_1(x, y)$, $I_n(x, y)$) and for at least one particle (22), a primary indicator characterizing the state of adhesion of the particle (22) to the transparent surface (29),

the method being **characterized in that** it further comprises the following step:

- computing (130), from at least one acquired image ($I_n(x, y)$) and for at least one particle (22), at least one secondary indicator (S, K) characterizing the spreading of a cell (22) having adhered to the transparent surface, said or each secondary indicator (S, K) being distinct from the primary indicator, at least one computed secondary indicator (S, K) depending on a moment of order M of the intensity at the center (52) of a corresponding diffraction pattern (50), M being an integer with a value greater than or equal to 3; and further the time derivative (dS/dt, dK/dt) of at least one computed secondary indicator (S, K) for detecting the spreading of the cell having adhered to the transparent surface.

2. The method according to claim 1, wherein the matrix photodetector (28) is able to measure the intensity (I) of at least one diffraction pattern (50), and
wherein the computed primary indicator depends on the intensity at the center (52) of a corresponding diffraction pattern (50).

3. The method according to claim 2, wherein a particle is determined as being adherent when the value of said primary indicator exceeds a threshold.

4. The method according to any one of the preceding claims, wherein the step for computing said or each primary indicator (120) includes the localization on the acquired image ($I_n(x, y)$), of the center (52) of each elementary diffraction pattern (50) corresponding to a predetermined pattern ($I_2$, $I_2'$, $I_2''$).

5. The method according to any one of the preceding claims, wherein the step for computing said or each primary indicator (120) includes the localization, on the acquired image ($I_n(x, y)$), of the center of an elementary diffraction pattern (50), this localization being achieved from:

- a reconstruction of an image of the particle (22) associated with said elementary diffraction pattern, by applying a reconstruction algorithm, and then
- the detection in the reconstructed image, of the position corresponding to the center (52) of said elementary diffraction pattern (50).

6. The method according to claim 4 or 5, wherein the method further comprises the definition of a region of interest (122, 136) around the center (52) of each elementary diffraction pattern.

7. The method according to any one of the preceding claims, wherein a first computed secondary indicator (S) depends on the moment of order 3 of the intensity at the center (52) of the corresponding diffraction pattern.

8. The method according to claim 7, wherein the step (130) for computing said or each first secondary indicator (S) includes the determination of a region of interest (122) of the acquired image including the corresponding diffraction pattern (50), and said or each first secondary indicator (S) verifies the following equation:

$$S = E\left[\left(\frac{X - \mu}{\sigma}\right)^3\right]$$

where X represents the distribution of the intensity of said determined region of interest (122), $\mu$ represents the quadratic average of the intensity of the determined region (122), and $\sigma$ represents the standard-deviation of the intensity of the determined region (122).

9. The method according to any one of the preceding claims, wherein a second computed secondary indicator (K) depends on the moment of order 4 of the intensity at the center (52) of the corresponding region of interest (122).

10. The method according to claim 9, wherein the step for computing said or each second secondary indicator (K) includes the determination of a region (122) of the acquired image including the corresponding diffraction pattern (50), and said or each second secondary indicator (K) verifies the following equation:

$$K = E\left[\left(\frac{X - \mu}{\sigma}\right)^4\right]$$

where X represents the distribution of the intensity of said determined region of interest (122), $\mu$ represents the quadratic average of the intensity of the determined region of interest (122), and $\sigma$ represents the standard-deviation of the intensity of the determined region of interest (122).

11. A system (20) for characterizing a state of adhesion of at least one particle (22), the particle(s) (22), such as cells, being contained in a liquid medium (24), the liquid medium (24) being delimited by a transparent surface (29), the particle(s) (22) being able to adhere to said transparent surface (29),
the system (20) comprising:

- a source of spatially coherent light (26) able to emit a light beam for illuminating the liquid medium (24),
- a matrix photodetector (28) able to acquire at least one image ($I_n(x, y)$) of radiation transmitted by the illuminated medium, the image ($I_n(x, y)$) including at least one diffraction pattern (50), each diffraction pattern (50) corresponding to waves diffracted by a particle (22) of the illuminated medium, the matrix photodetector (28) being able to measure the distribution (X) of the intensity (I) of at least one diffraction pattern (50), and
- an information processing unit (30) including means (36) for computing, from at least one acquired image ($I_n(x, y)$) and for at least one particle (22), a primary indicator characterizing the state of adhesion of the particle (22) to the transparent surface (29)

the system being **characterized in that** the information processing unit (30) further includes means (37) for computing, from at least one acquired image ($I_n(x, y)$) and for at least one particle (22), at least one secondary indicator (S, K) characterizing the spreading of a cell (22) having adhered to the transparent surface, said or each secondary indicator (S, K) being distinct from the primary indicator, at least one computed secondary indicator (S, K) depending on a moment of order M of the intensity at the center (52) of a corresponding diffraction pattern (50), M being an integer with a value greater than or equal to 3; and for computing the time derivative (dS/dt, dK/dt) of at least one computed secondary indicator (S, K) for detecting the spreading of the cell having adhered to the transparent surface.

## FIG.1

## FIG.2

$\underline{\text{FIG.3}}$

| Eclairement du milieu liquide | 100 |

↓

| Acquisition, par le photodétecteur matriciel, d'image(s) du milieu éclairé | 110 |

↓

| Calcul d'un indicateur primaire caractérisant l'état d'adhésion de la particule à la surface | 120 |

↓

| Calcul d'au moins un indicateur secondaire caractérisant l'étalement d'une particule ayant adhéré à la surface | 130 |

$\underline{\text{FIG.4}}$

## FIG.5

## FIG.6

FIG.7

FIG.8

FIG.9

FIG.10

## FIG.11

## FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1256816

**Littérature non-brevet citée dans la description**

- **LÖSTER et al.** Enzymatic quantification of cell-matrix and cell-cell adhesion. *Micron,* Janvier 2000, vol. 31 (1), 41-53
- **DE M. J. HUMPHRIES.** Cell adhesion assays. *Methods in molecular biology,* Janvier 2009, vol. 522, 203-210
- **SATYANARAYANAJOIS et al.** Heterotypic Cell Adhesion Assay for the Study of Cell Adhesion Inhibition. *Drug Design and Discovery*
- **ALLIER.** *Video lensfree microscopy of 2D and 3D culture of cells''*
- **DOLEGA.** *Label-free analysis of prostate acini-like 3D structures by lensfree imaging*
- **VINJIMORE.** *Multi-scale high-throughput cell culture monitoring by lensfree imaging*
- **VINJIMORE.** *Lensless imaging system to quantify cell prolifération*
- **RAGHUNATHAN.** *Influence of extracellular matrix proteins and substratum topography on corneal epithelial cell alignment and migration*
- **DE HAND A. J. ; SUN T. ; BARBER D. C. ; HOSE D. R ; MACNEIL S.** Automated tracking of migrating cells in phase-contrast video microscopy sequences using image registration. *Journal of Microscopy,* 2009, vol. 234, 62-79